# EUROPÄISCHE PATENTANMELDUNG

(11) **EP 0 589 332 A1**
(43) Veröffentlichungstag der Anmeldung: **30.03.1994**
(21) Anmeldenummer: 93114724.3
(22) Anmeldetag: 14.09.1993
(51) Int. Cl.: B21K 1/76

(54) **Verfahren zur Herstellung eines Betätigungsorgans**

(30) Priorität: 24.09.1992 DE 9212811 U; 13.03.1993 DE 4308016; 13.03.1993 DE 9303710 U
(71) Anmelder: Gebr. Felss GmbH & Co. KG., D-75203 Königsbach-Stein (DE)
(72) Erfinder: Wiegel, Lutz, Dipll-Ing., D-76327 Pfinztal 1 (DE)
(74) Vertreter: Twelmeier, Ulrich, Dipl.Phys.

(57) **Zusammenfassung**

Die Erfindung bezieht sich auf ein Verfahren zur Herstellung eines Betätigungsorgans, insbesondere zum Betätigen von Bremsen, mit einem Schaft und einem an einem Schaftende ausgebildeten Kopf. Es wird vorgeschlagen zunächst einen kegelförmigen Kopf (2') mit einer sich von der Stirnseite des Kopfes (2') in axialer Richtung erstreckenden Ausnehmung (4;5) herzustellenden und anschließend den Kopf (2') im Wege der Kaltumformung in die gewünschte Endform umzuformen.

## Beschreibung

Die Erfindung bezieht sich auf ein Verfahren zur Herstellung eines Betätigungsorgans, insbesondere für Bremsen mit den im Oberbegriff des Anspruchs 1 angegebenen Merkmalen.

Es sind Betätigungsorgane bekannt, welche einen Schaft und einen sich an ein Schaftende anschliessenden Kopf aufweisen. Der Kopf ist dabei vorzugsweise keilförmig ausgebildet. Solche Betätigungsorgane werden z.B. bei Trommelbremsen mit innenliegenden Bremsbacken eingesetzt. Die Bremswirkung wird dabei durch Spreizung der Bremsbacken, welche zur Anlage an die Bremstrommel kommen erzielt, wobei durch Verschiebung des Betätigungsorgans der keilförmig ausgebildete Kopf die Bremsbacken spreizt.

Derartige keilförmigen Betätigungsorgane werden durch spanabhebende Bearbeitungsverfahren hergestellt. Nachteilig bei diesen Herstellungsverfahren ist, daß diese relativ aufwendig, d.h. zeit- und somit kostenintensiv sind. Bei der Herstellung ist zu berücksichtigen, daß die Keilflächen des Betätigungsorgans an entsprechenden Gegenflächen entlanggleiten, so daß an die Oberflächengüte hohe Anforderungen gestellt werden. Diese relativ hohe Oberflächengüte wird unter anderem verlangt, weil die zur Betätigung notwendige Kraft gering gehalten werden soll und somit auch die Reibungsverluste. Die Oberflächengüte wird durch Schleifen und/oder Läppen hergestellt. Nachteilig bei der Herstellung eines Betätigungsorgans mit einem keilförmigen Kopf ist, daß mehrere Bearbeitungsschritte notwendig sind.

Der vorliegenden Erfindung liegt die Aufgabe zugrunde ein Verfahren zur Herstellung eines Betätigungsorgans anzugeben, durch welches in einfacher Weise ein Betätigungsorgan hergestellt werden kann, welches den geforderten Genauigkeiten entspricht.

Diese Aufgabe wird durch die Merkmale des Anspruchs 1 gelöst. Vorteilhafte Weiterbildungen sind Gegenstand der Unteransprüche.

Das erfindungsgemäße Verfahren zur Herstellung eines Betätigungsorgans zeichnet sich dadurch aus, daß der Kopf in einem ersten Schritt kegelförmig mit einer Ausnehmung, die von der Stirnseite her sich axial erstreckt, ausgebildet wird. In einem zweiten Schritt wird der kegelförmige Kopf kaltumgeformt, wobei durch die Umformung der Kopf eine keilförmige Gestalt annimmt.

Der Vorteil dieses Verfahrens besteht darin, daß der Kopf nach dem dieser kegelförmig ausgebildet wurde und mit einer Ausnehmung versehen wurde, einem Kaltumformverfahren zugeführt wird, wodurch in einem Verfahrensschritt der Kopf in die vorgesehene Gestalt umgeformt wird.

Der kegelförmige Kopf wird vorteilhaft durch ein spanabhebendes Verfahren hergestellt. Wird der kegelförmige Kopf durch ein spanabhebendes Verfahren hergestellt, so hat es sich als zweckmäßig erwiesen, wenn zuerst die Ausnehmung und anschließend der kegelförmige Kopf hergestellt wird. Dies hat den Vorteil, daß die Ausnehmung zur Aufnahme einer Zentrierspitze benutzt werden kann, wenn der Kopf kegelförmig abgedreht wird.

Eine Umkehrung der Herstellungsschritte ist möglich.

Es hat sich gezeigt, daß der Kopf auch durch Fließpressen hergestellt werden kann. Dies hat den Vorteil, daß zur Herstellung des Betätigungsorganes nur ein Materialstück verwendet werden kann. Wird der kegelförmige Kopf durch Fließpressen hergestellt, so kann die Ausnehmung während des Fließpreßvorgangs hergestellt werden.

Zum Herstellen des Betätigungsorgans ist es von Vorteil, wenn ein kegelförmiger Kopf mit einer Durchgangsbohrung hergestellt wird, und in einem zweiten Schritt der Kopf mit dem Schaft verbunden wird, wobei das eine Ende des Schaftes sich teilweise in die Bohrung erstreckt und in einem dritten Schritt der Kopf in einem Kaltumformverfahren hergestellt wird. Durch das Umformverfahren wird eine feste Verbindung zwischen dem Schaft und dem Kopf erzielt.

Der vorliegenden Erfindung liegt ferner die Aufgabe zugrunde, ein Halbfertigfabrikat eines Betätigungsorgans anzugeben, welches für die weitere Verarbeitung günstiger gestaltet ist.

Diese Aufgabe wird durch die Merkmale des Anspruchs 10 gelöst. Vorteilhafte Weiterbildungen sind Gegenstand der Unteransprüche 11 bis 16.

Das erfindungsgemäße Halbfertigfabrikat zeichnet sich dadurch aus, daß der Kopf kegelförmig ausgebildet ist und eine sich im wesentlichen in axialer Richtung erstreckende Ausnehmung aufweist. Durch diese Ausbildung kann das Halbfertigfabrikat der weiteren Verarbeitung zugeführt werden, in welcher der kegelförmige Kopf durch Kaltumformung in einen Kopf mit einem polygonalen Querschnitt umgeformt wird, wobei sich der Kopf vom Schaft weg verjüngt. Durch diese Ausgestaltung des Halbfertigfabrikates wird eine einfache Bearbeitung erzielt, welche als Ergebnis das gewünschte Betätigungsorgan liefert.

Die Ausbildung des Halbfertigfabrikats hat den Vorteil, daß die Kaltumformung des Halbfertigfabrikats gegenüber spanabhebender Herstellung des Betätigungsorgans kostengünstiger ist. Die Anbringung der Ausnehmung im Kopf hat den Vorteil, daß das Fließverhalten während der Kaltumformung des Kopfes derart begünstigt wird, daß die zur Umformung notwendige Energie reduziert werden kann.

Die Reduzierung der zur Umformung notwendigen Energie und somit der aufzuwendenden Kraft spiegelt sich in der Ausgestaltung der Herstellungsmaschine wieder. Diese kann kleiner urd somit kostengünstiger ausgebildet werden.

Die Kaltumformung des Kopfes hat auch den Vorteil, daß die Oberflächengüte des Kopfes bereits so gut ist, daß eine anschließende Bearbeitung durch Läppen oder Schleifen, wie das im Stand der Technik ist, entfallen kann.

Es hat sich herausgestellt, daß bei einer Ausnehmung, welche zwei Abschnitte aufweist, wobei der erste Abschnitt, von der Stirnseite des Kopfes aus gesehen, einen größeren Querschnitt aufweist als der zweite Abschnitt, die Kaltumformung weiter begünstigt wird. Das Fließverhalten des Materials wird begünstigt, wenn der Querschnitt der Ausnehmung von der Stirnseite in axialer Richtung abnimmt. Es versteht sich, daß nach dem Umformvorgang die Stirnseite des Kopfes keine Ausnehmung aufweist, so daß der Hohlraum im kegelförmigen Kopf durch den Umformvorgang verschlossen wird. Der so hergestellte Kopf bedarf keiner weiteren Bearbeitung.

Von Vorteil ist es, wenn es sich bei den Ausnehmungen um Bohrungen handelt. Diese können vor oder nach einer Herstellung des kegelförmigen Kopfes stirnseitig im Kopf ausgebildet werden. Eine Umspannung des Betätigungsorgans ist in einem derartigen Fall nicht notwendig.

Die Herstellung des kegelförmigen Kopfes mit den Ausnehmungen bzw. der Ausnehmung kann in einem Arbeitsabschnitt durch zwei Arbeitsvorgänge gemacht werden.

Die Herstellung der Bohrungen wird erleichtert, wenn diese koaxial zueinander ausgebildet sind. Die Ausnehmung erstreckt sich dabei teilweise in den Kopf hinein. Es kann auch zweckmäßig sein, eine Ausnehmung auszubilden, welche den kegelförmigen Kopf durchdringt. Dies wird insbesondere dann von Vorteil, wenn der Kopf relativ groß sein soll und die Verbindung zwischen dem kegelförmigen Kopf und dem Schaft durch die Kaltumformung hergestellt wird.

Weitere Vorteile und Merkmale werden nachfolgend anhand einer Ausführungsform beschrieben, dabei zeigt:
- Figur 1: ein Halbfertigfabrikat eines Betätigungsorgans im Längsschnitt,
- Figur 2: einen Schnitt durch den Kopf des Halbfertigfabrikats nach Figur 1 entlang II-II,
- Figur 3: zeigt das Betätigungsorgan nach Figur 1 nach einer Kaltumformung,
- Figur 4: zeigt den Kopf des Betätigungsorgans nach Figur 3 im Schnitt entlang Linie IV-IV.

Das Halbfertigfabrikat wird aus einem Rohling hergestellt, welcher nach vorhergehenden Arbeitsschritten eine in der

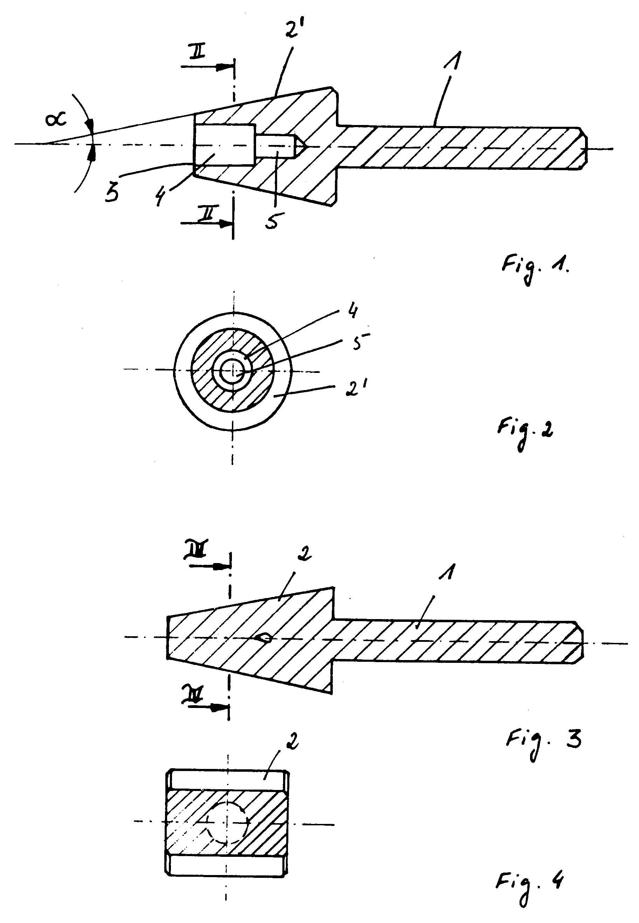

Figur 1 dargestellte Außenkontur aufweist.

Das Halbfertigfabrikat weist einen Schaft 1 und einen am Schaft 1 ausgebildeten Kopf 2' auf. Der Kopf 2' ist kegelstumpfförmig ausgebildet. Ein Neigungswinkel α der Mantelfläche des Kopfes 2' ist einem sich anschliessenden Kaltumformverfahren angepaßt.

Von der Stirnseite 3 des kegelstumpfförmigen Kopfes 2' erstreckt sich eine erste Bohrung 4, welche sich teilweise in axialer Richtung des Kopfes 2' erstreckt. Der ersten Bohrung 4 schließt sich eine zweite Sacklochbohrung 5 an.

Die Bohrung 4 und die Sacklochbohrung 5 sind kozentrisch zueinander angeordnet.

Die Abmessungen der Bohrungen (Durchmesser und Länge) sind abhängig von der Kopfform, dem Elastizitätsmodul des Kopfwerkstoffes und der gewünschten Kopfform nach einem Kaltumformvorgang.

In der Figur 3 ist ein Betätigungsorgan nach Figur 1 dargestellt, bei welchem der Kopf 2 mittels eines Kaltumformverfahrens geformt wurde.

Der Kopf 2 ist keilförmig ausgebildet.

Die Herstellung des Betätigungsorgans erfolgt in der Weise, daß der Kopf 2' zunächst kegelförmig ausgebildet wird. Dies kann vorteilhafterweise spanabhebend oder spanlos durch Fließpressen erfolgen. Nachdem der Kopf 2' kegelförmig ausgebildet wurde, werden von der Stirnseite 3 des Kopfes 2' her in demselbigen Bohrungen 4,5 ausgebildet. Wird der Kopf spanlos durch Fließpressen hergestellt, so kann die Ausnehmung während des Preßvorgangs hergestellt werden.

Das so hergestellte Betätigungsorgan wird einer Kaltumformung zugeführt. Bei der Kaltumformung handelt es sich vorteilhafterweise um Freiformen, insbes. um Kneten.

Die gewünschte Geometrie des Kopfes 2 kann auch durch andere Kaltumformverfahren erzielt werden.

Vorteilhaft bei dieser Vorgehensweise ist, daß nach dem Kaltverformen des Kopfes, der Kopf einer Nachbearbeitung nicht bedarf. Hierbei hat sich herausgestellt, daß für die Maßgenauigkeit des Kopfes die im Kopf vorgesehene Ausnehmung bzw. Ausnehmungen wesentlich sind, da diese das Fließverhalten des Werkstoffes des Kopfes in positiver Richtung beeinflussen.

Es hat sich überraschenderweise gezeigt, daß bei Betätigungsorganen, wie in der Figur 3 dargestellt, der Kopf 2 nicht nur nicht nachbearbeitet werden muß, sondern auch die im wesentlichen in Längsrichtung verlaufenden Kanten des Kopfes 2 nicht entgrate zu werden brauchen, da bei einer entsprechenden Anpassung der Bohrungen an die Kopfgeometrie ein Grat an den Kanten nicht entstehen kann.

Durch die Kaltumformung des Kopfes bleibt im Gegensatz zur Spanbearbeitung ein ungestörter Faserverlauf erhalten. Durch die Kaltverformung des Kopfes wird der durch die Bohrungen 4;5 entstehende Hohlraum geschlossen. Gemäß einem weiteren Gedanken kann das Betätigungsorgan zweiteilig aus einem Schaft 1 und einem Kopf 2' bestehen, wobei der Schaft 1 in eine Ausnehmung im Kopf 2' eingreift und die Verbindung zwischen dem Schaft 1 und dem Kopf 2' durch Kaltumformung des Kopfes 2' erfolgen kann. In derartigen Fällen ist es von Vorteil die Geometrie des Kopfes bzw. des Schaftes gegenseitig anzupassen.

Es versteht sich, daß das Verfahren auch auf andere Teile angewendet werden kann.

## Patentansprüche

**1.** Verfahren zur Herstellung eines Betätigungsorgans,
insbesondere zum Betätigen von Bremsen, mit einem Schaft und einem an einem Schaftende ausgebildeten Kopf, **dadurch gekennzeichnet**, daß zunächst ein kegelförmiger Kopf (2') mit einer sich von der Stirnseite des Kopfes (2') in axialer Richtung erstreckenden Ausnehmung (4;5) hergestellt wird und anschließend der Kopf (2') kaltumgeformt wird.

**2.** Verfahren nach Anspruch 1,
**dadurch gekennzeichnet**, daß der kegelförmige Kopf (2') durch Kneten umgeformt wird.

**4.** Verfahren nach Anspruch 1,
**dadurch gekennzeichnet**, daß der kegelförmige Kopf (2') durch ein spanabhebendes Verfahren hergestellt wird.

**5.** Verfahren nach Anspruch 1,
**dadurch gekennzeichnet**, daß der kegelförmige Kopf (2') durch Fließpressen hergestellt wird.

**6.** Verfahren nach Anspruch 5,
**dadurch gekennzeichnet**, daß die Ausnehmung (4;5) während der Kopfherstellung erfolgt.

**7.** Verfahren nach Anspruch 4 oder 5,
**dadurch gekennzeichnet**, daß zuerst der kegelförmige Kopf (2') und anschließend die Ausnehmung (4;5) hergestellt wird.

**8.** Verfahren nach Anspruch 4,
**dadurch gekennzeichnet**, daß zuerst die Ausnehmung (4;5) und anschließend der kegelförmige Kopf (2') hergestellt wird.

**9.** Verfahren nach einem oder mehreren vorstehenden
Ansprüchen, **dadurch gekennzeichnet**, daß in einem ersten Schritt ein kegelförmiger Kopf (2') mit einer Durchgangsbohrung hergestellt wird, in einem zweiten Schritt der Kopf mit dem Schaft (1) verbunden wird, wobei das eine Schaftende sich teilweise in der Bohrung befindet und in einem dritten Schritt der Kopf kaltumgeformt, wobei durch die Umformung der Kopf (2') mit dem Schaft (1) verbunden wird.

**10.** Betätigungsorgan, insbesondere zum Betätigen von
Bremsen, mit einem Schaft und einem an einem Schaftende ausgebildeten Kopf, **dadurch gekennzeichnet**, daß der Kopf (2') kegelförmig ausgebildet ist und eines sich i.w. in axialer Richtung erstreckende Ausnehmung (4;5) aufweist.

**11.** Betätigungsorgan nach Anspruch 9,
**dadurch gekennzeichnet**, daß die Ausnehmung einen ersten Abschnitt und einen zweiten, sich an dem ersten Abschnitt anschließenden Abschnitt aufweist, wobei der Querschnitt des ersten Abschnittes größer als der Querschnitt des zweiten Abschnittes ist.

**12.** Betätigungsorgan nach Anspruch 10 oder 11, **dadurch gekennzeichnet**, daß die Bohrungen (4;5) konzentrisch zueinander ausgebildet sind.

**14.** Betätigungsorgan nach einem der mehreren vorstehen
den Ansprüche 10 bis 13,
**dadurch gekennzeichnet**, daß sich die Ausnehmung (4;5) teilweise in axialer Richtung des Kopfes (2') erstreckt.

**15.** Betätigungsorgan nach einem oder mehreren Ansprüchen 10 bis 12, **dadurch gekennzeichnet**, daß die Ausnehmung den Kopf (2') in axialer Richtung durchdringt.

**16.** Betätigungsorgan nach Anspruch 10,
**dadurch gekennzeichnet**, daß sich der Querschnitt der Ausnehmung von der Stirnseite (3) in axialer Richtung kontinuierlich vermindert.
